# EUROPEAN PATENT SPECIFICATION

(11) **EP 4 414 931 B1**
(45) Date of publication and mention of the grant of the patent: **03.12.2025**
(21) Application number: 23155841.2
(22) Date of filing: 09.02.2023
(51) Int. Cl.: G06T 7/00

(54) **METHODS, SYSTEMS AND COMPUTER PROGRAMS FOR ADJUSTING A FIRST AND A SECOND MACHINE-LEARNING MODEL AND FOR PROCESSING A SET OF IMAGES, IMAGING SYSTEM**
VERFAHREN, SYSTEME UND COMPUTERPROGRAMME ZUR EINSTELLUNG EINES ERSTEN UND EINES ZWEITEN MASCHINENLERNMODELLS UND ZUR VERARBEITUNG EINES SATZES VON BILDERN, BILDGEBUNGSSYSTEM
PROCÉDÉS, SYSTÈMES ET PROGRAMMES INFORMATIQUES POUR AJUSTER UN PREMIER ET UN SECOND MODÈLE D'APPRENTISSAGE AUTOMATIQUE ET POUR TRAITER UN ENSEMBLE D'IMAGES, SYSTÈME D'IMAGERIE

(43) Date of publication of application: 14.08.2024
(73) Proprietor: Leica Microsystems CMS GmbH, 35578 Wetzlar (DE)
(72) Inventor: GUERREIRO-LUCAS, Luciano Andre, 35578 Wetzlar (DE); KAPPEL, Constantin, 35578 Wetzlar (DE)
(74) Representative: 2SPL Patentanwälte PartG mbB

(56) References cited:
- US-A1- 2020 234 025
- US-A1- 2022 246 244
- US-A1- 2023 011 970

## Description

### Technical field

Examples relate to method, system, and computer program for adjusting a first and a second machine-learning model, to a method, system, and computer program for processing a set of images, imaging system, and to an imaging system.

### Background

In biomedical research, biological processes are monitored using imaging systems, such as microscopes. In many research methodologies, hypotheses are tested by observing such biological processes over time, and using the observations to conclude whether the observations match the respective hypotheses. In general, this monitoring of the biological processes can be improved, and, to a degree, automated, by evaluating the observations with the help of an image analysis workflow, which is used to analyze various aspects of the image data showing the biological process. However, designing such an image analysis workflow may require a substantial amount of skill from the operator of the respective imaging system.

US 2023/0011970 A1 discloses a method 100 for extracting features from a microscope image having information on a state of the biological system and using the features and the meta data to predict the future state of the biological system .

There may be a desire for providing an improved concept for configuring an image analysis workflow of an imaging system being used for the observation of biological processes.

### Summary

This desire is addressed by the subject-matter of the independent claims.

Various examples of the present disclosure are based on the finding, that, when a hypothesis to be confirmed is known, machine-learning can be used to tune the image analysis workflow such, that it is capable of providing the information required for testing the hypothesis. For this purpose, two machine-learning models are trained together - a first machine-learning model to configure the image analysis workflow (or to implement the image analysis workflow), and a second machine-learning model to predict the hypothesis being tested. By end-to-end training the first and second machine-learning model, the output of the first machine-learning model converges towards an image analysis workflow that is suitable for predicting the hypothesis, and that is thus also suitable for evaluating the hypothesis. Thus, the image analysis workflow can be configured or implemented without requiring manual adjustments by the operator, which facilitates the process, in particular for less experienced operators.

Some aspects of the present disclosure relate to a method for adjusting a first and a second machine-learning model. The method comprises inputting a set of images representing a biological process into the first machine-learning model. The first machine-learning model is trained to perform an image analysis workflow or to generate parameters for parametrizing an image analysis workflow. The method comprises inputting an output of the image analysis workflow into the second machine-learning model. The second machine-learning model is trained to output a prediction of a hypothesis being evaluated using the biological process. The method comprises calculating a loss function based on a difference between the prediction of the hypothesis being evaluated using the biological process and an actual hypothesis being evaluated using the biological process. The method comprises adjusting the first and/or second machine-learning model based on the result of the loss function. As outlined above, the resulting image analysis workflow converges towards an image analysis workflow that is suitable for predicting the hypothesis, without requiring manual adjustments by the operator, which facilitates the process, in particular for less experienced operators.

**In** various examples, the goal of the proposed procedure is to identify a configuration or implementation of the image analysis pipeline that is suitable for confirming or disproving the hypothesis. Accordingly, adjustment of the first and/or second machine-learning model may continue until the hypothesis predicted by the second machine-learning model matches the actual hypothesis that is to be confirmed. **In** other words, the first and/or second machine-learning model may be adjusted until the prediction of the hypothesis matches the actual hypothesis according to a matching criterion.

While the proposed scheme can be applied from scratch to an arbitrary set of images and corresponding hypothesis, convergence may be sped up by training the machine-learning model(s) first in a training phase, and then just performing minor adjustments in an application phase. In some examples, the method may be performed over a plurality of iterations using a plurality of sets of images as training input images and a plurality of corresponding actual hypotheses for comparison with the hypotheses predicted by the second machine-learning model to train the first and/or second machine-learning model. This may occur in the training phase, to obtain machine-learning models that can be broadly applied to different sets of images and hypotheses. In the application phase, the adjustment may be continued, albeit with the set of images and hypothesis for which an image analysis workflow is to be established.

As an alternative to the training of the machine-learning model(s) being part of the proposed method, the training of the machine-learning model(s) may be performed a priori, e.g., by a different entity, such as the manufacturer of an imaging system on which the proposed method is to be applied. For example, the first and second machine-learning models may be pre-trained machine-learning models, which are adjusted in the field.

The proposed concept works by applying machine-learning, e.g., supervised learning, on an entire pipeline comprising the first machine-learning model, the second machine-learning model, and, if not already implemented by the first machine-learning model, the image analysis workflow. During training, the loss function (or reward function) is based on the difference between the output of the pipeline and the actual hypothesis. As there is no separate way to evaluate the output of the first machine-learning model, both machine-learning models may be trained together in an end-to-end manner. In other words, the first and second machine-learning model may be adjusted and/or trained together in an end-to-end manner.

As outlined above, there are two broad implementation categories for implementing the first machine-learning model. In a first implementation category, the first machine-learning model is used to parametrize a separate image analysis workflow, while, in the second implementation category, the first machine-learning model includes the image analysis workflow. In the first implementation category, the first machine-learning model may be trained to generate parameters for parametrizing the image analysis workflow. In this case, the method comprises processing the set of images using the image analysis workflow. Moreover, the image analysis workflow is parametrized based on an output of the first machine-learning model.

In the present context, parametrizing the image analysis workflow is not (necessarily) restricted to the generation of parameters for a fixed set of image processing/analysis steps. It may also mean selecting the image processing/analysis steps being used, in addition to parameters being used to parametrize the selected image processing/analysis steps. For example, the first machine-learning model may be trained to select at least one of a use of one or more image processing steps, one or more numerical parameters of one or more image processing steps, and one or more categorical parameters of one or more image processing steps for the image analysis workflow. In particular, the image analysis workflow may comprise at least one of one or more deterministic image processing steps and one or more machine-learning-based image processing steps. These imaging processing steps may be selected and/or parametrized by the first machine-learning model.

While, during adjustment/training of the machine-learning model, the output of the second machine-learning model is used to calculate the loss function, during application of the pipeline, the output of the image analysis workflow may be the desired output, to enable a manual or automated evaluation of the hypothesis. Accordingly, the method may comprise providing the output of the image analysis workflow.

In some examples, it may be beneficial for the performance of the second machine-learning model if the second machine-learning model does not only receive the output of the image analysis workflow (which might not contain the images), but also the images (or processed versions thereof). For example, the set of images or a processed version of the set of images may be used as further input to the second machine-learning model. This may speed up convergence of the machine-learning model(s) during training and/or adjustment of the machine-learning model(s).

As the name implies, a biological process involves some kind of transformation (i.e., development). If such a biological process is to be monitored using an imaging system, this transformation is also discernible from the images documenting the biological process. Accordingly, the set of images may comprise a sequence of images showing a development of the biological process over time.

Machine learning is a (mostly) automated process, which is based on the determination of a loss function (or reward function), which represents the quality of the transformations applied to the machine-learning model during adjustment/training. In the present case, to be able to calculate such a loss function, the respective hypotheses may be codified in a formal representation, such that the two hypotheses can be compared to calculate the loss function. For example, the second machine-learning model may be trained to output a formal representation of the prediction of the hypothesis. The loss function may be calculated based on a comparison between the formal representation of the prediction of the hypothesis and a formal representation of the actual hypothesis. The formal representation may enable or facilitate the automated calculation of the loss function.

During training, the hypotheses being used may be taken from the training corpus comprising the plurality of sets of images. However, to prepare such a corpus, or during application of the proposed concept on a new set of images and hypothesis, the hypothesis may be derived from a user input. For example, the method may comprise processing user input to generate the formal representation of the actual hypothesis. For example, this may be part of a wizard for configuring the image analysis workflow, which may start by taking the set of images using an imaging device (such as a microscope) and by inputting the hypothesis.

The specification of a formal representation is a highly complex task. However, the structured nature of the formal representation defines a template that can be filled efficiently by filling in the blanks of the template. This can be done by recognizing the content of the blanks in the user input. For example, the user input may comprise one of spoken text and unstructured written text. The method may comprise processing the user input using natural language processing. This may greatly facilitate inputting the hypothesis. Alternatively, the user input may comprise structured input.

In the following, details are given on an example implementation of such a formal representation of the hypothesis. In the following, the templates of the hypothesis are presented. For example, the respective formal representation may represent at least one of a relation between two entities, a relation between two entities being dependent on a condition, a cell fate being dependent on a condition, a cell type distribution being dependent on a condition, a two-dimensional or three-dimensional geometry being dependent on a condition, and an entity distribution of a non-numerable entity being dependent on a condition. For example, in case of the formal representation representing a relation between two entities, the "blanks" in the template may include the type of relation, a first entity, and a second entity. For example, in case of the formal representation representing a cell fate being dependent on a condition, the "blanks" in the template may include the cell fate and the condition etc.

In the following, examples are given for "entity", "relation" and "condition". For example, an entity may be of type chemical, protein, nucleotide, carbohydrate, lipid, drug and disease. For example, a relation may comprise one of a first entity acting as activator for a second entity, a first entity acting as inhibitor for a second entity, a first entity acting as antagonist for a second entity, a first entity acting as upregulator for a second entity, a first entity acting as downregulator for a second entity, a first entity acting as substrate of a second entity, a first entity being a product of a second entity. Additionally, or alternatively, a relation may be one of a chemical-protein relation, a drug-drug-interaction, and a gene-disease interaction, and a participant-intervention-comparator-output relation. For example, a condition may be one of a perturbant concentration condition, a culture condition, a co-culture condition, a cell composition condition and a proximity condition. By defining suitable lists of templates, entities, relations and conditions, the respective hypotheses may be easily constructed, e.g., using natural language processing, and in particular using named entity recognition.

In some examples, the training and/or adjustment of the machine-learning model(s) may be done by one system, while the resulting image processing workflow is used on another system. Some aspects of the present disclosure relate to a method for processing a set of images representing a biological process. The method comprises inputting the set of images representing the biological process into a machine-learning model. The machine-learning model is trained, according to the above method, to perform an image analysis workflow or to generate parameters for parametrizing an image analysis workflow. The method comprises processing the set of images using the image analysis workflow. The method comprises providing an output of the image analysis workflow.

As outlined above, in some cases, the output of the image processing workflow is used (directly) to evaluate the hypothesis. In some examples, in addition to the output of the processing workflow, or instead of it, the output of the second machine-learning model (i.e., the predicted hypothesis) may be used as part of the evaluation of the image processing workflow. For example, the method may comprise inputting the output of the image analysis workflow into a second machine-learning model, the second machine-learning model being trained to output a prediction of a hypothesis being evaluated using the biological process. The method may comprise providing the prediction of the hypothesis being evaluated using the biological process.

Another aspect of the present disclosure relates to a system comprising one or more processors and one or more storage devices. The system is configured to perform at least one of the above methods. In general, such a system may be placed in different locations, i.e., training and application of the proposed concept may be performed in different locations. For example, the system may be one of a server, a cloud computing node, a workstation computer and an embedded device.

An aspect of the present disclosure relates to computer program with a program code for performing the method according to one of the above methods when the computer program may be run on a processor.

Another aspect of the present disclosure relates to an imaging system comprising the above system and a scientific imaging device, such as a microscope. For example, the scientific imaging device is configured to generate the set of images. For example, the system may be co-located with the scientific imaging device. In other words, the proposed concept may be applied locally, at the scientific imaging device.

### Short description of the Figures

Some examples of apparatuses and/or methods will be described in the following by way of example only, and with reference to the accompanying figures, in which:
- Figs. 1a and 1b: show flow charts of examples of a method for adjusting a first and a second machine-learning model;
- Fig. 2: shows a schematic diagram of an example of a flow for training the hypothesis prediction pipeline;
- Fig. 3: shows a schematic diagram of an example of a flow for obtaining an input of a hypothesis from a user;
- Fig. 4: shows a flow chart of an example of a method for processing a set of images representing a biological process;
- Fig. 5: shows a schematic diagram of an example of a system, and of an imaging system comprising a system and a scientific imaging device; and
- Fig. 6: shows a schematic diagram of an example of a system comprising an imaging device and a computer system.

### Detailed Description

Various examples will now be described more fully with reference to the accompanying drawings in which some examples are illustrated. In the figures, the thicknesses of lines, layers and/or regions may be exaggerated for clarity.

Various examples of the present disclosure relate to a concept (e.g., a method) for selecting an appropriate image analysis workflow based on user input, e.g., based on a user input of a scientific hypothesis.

The present disclosure relates to biomedical imaging, and in particular to a system which automatically selects and configures an image analysis workflow which is improved or optimized to predict information supporting a user-defined hypothesis. In the following, it is discussed how a hypothesis can be formulated that can be answered by biomedical images which have been transformed and from which information was extracted and how to find a mapping from image to information and information to hypothesis by means of image analysis and machine learning. For example, the present concept may be used to select, configure, and modify an image analysis workflow in response to a user-defined hypothesis.

In other systems, selecting and configuring an image analysis workflow is typically done manually by the user. In such systems, the user needs a lot of technical expertise in image analysis as well as microscopy in order to pick or create a suitable image analysis workflow. The hypothesis has to be formulated precisely and then an experiment has to be designed and an image analysis workflow has to be created. The proposed concept assists with the latter task.

In the proposed concept, a backwards path is used from the goal of supporting or disproving a given scientific hypothesis. It is discussed how to build and train a pipeline for extracting relevant information from images which support this hypothesis. Selection and configuration of the image analysis workflow is based on learned parameters and can therefore be automated, given suitable biomedical images, a clearly formulated hypothesis and the possibility of finding a mapping between the two.

The proposed concept comprises two aspects - configuring and training an image analysis workflow, and inputting and formulating a hypothesis by the user (optional). For the former (configurating and training an image analysis workflow), the image analysis workflow may be configured and/or trained to improve or optimize the extraction of image information suitable to observation of the hypothesis in question using images from user input, an imaging device or a data repository. For the latter (inputting and formulating a hypothesis by the user), at least one of a voice interface which translates utterings into unstructured text, a standard text input by means of which the user can input the hypothesis as unstructured text, or an expert interface where the user selects observables, entities and relations from a guided dialog may be used.

In the following, the two tasks are described separately - how does the system select a suitable workflow based on this hypothesis and microscope images, and how does the user formulate a scientific hypothesis.

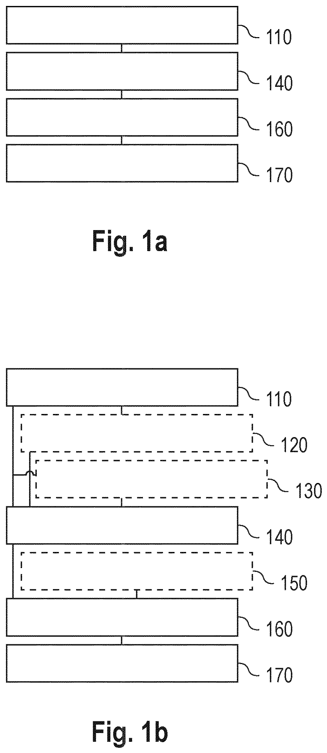

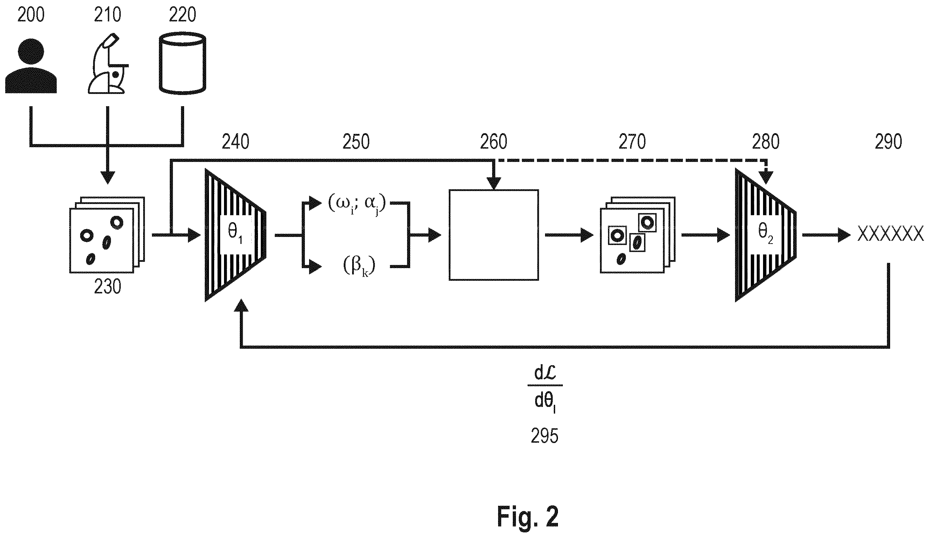

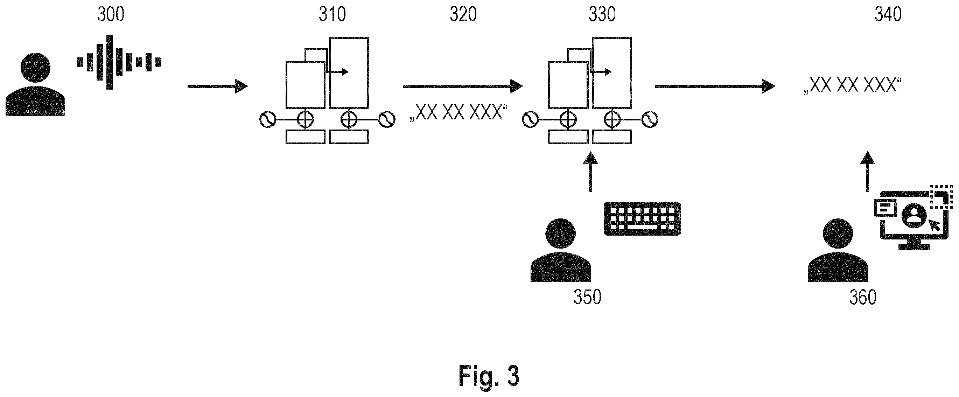

First, the configuration of a suitable image analysis workflow is discussed. This is done with the help of a pair of machine-learning models. Figs. 1a and 1b show flow charts of examples of a method for adjusting a first and a second machine-learning model, which are used together to configure or implement the image analysis workflow. The method comprises inputting 110 a set of images 230 (shown in Fig. 2) representing a biological process into the first machine-learning model 240 (shown in Fig. 2). The first machine-learning model is trained to perform an image analysis workflow or to generate parameters 250 (shown in Fig. 2) for parametrizing an image analysis workflow 260 (shown in Fig. 2). The method comprises inputting 140 an output 270 (shown in Fig. 2) of the image analysis workflow into the second machine-learning model 280 (shown in Fig. 2). The second machine-learning model is trained to output a prediction 290 (shown in Fig. 2) of a hypothesis being evaluated using the biological process. The method comprises calculating 160 a loss function based on a difference between the prediction of the hypothesis being evaluated using the biological process and an actual hypothesis 330 (shown in Fig. 3) being evaluated using the biological process. The method comprises adjusting 170 the first and/or second machine-learning model based on the result of the loss function.

The method of Figs. 1a and 1b relates to an adjustment of at least one (usually both) of the machine-learning models. **In** the following, a short introduction to machine learning is given, followed by a discussion of the use of machine-learning in the present context.

Machine learning generally refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, in a popular example of machine-learning, the content of images may be analyzed using a machine-learning model or using a machine-learning algorithm. **In** order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data, or more generally, data, as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

**In** many cases, machine-learning models may be trained using training input data. The examples specified above use a training method called "supervised learning". **In** supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In the present context, a more complex setting is used, in which two machine-learning models are used together as part of a pipeline, with an image analysis workflow inserted between the two machine-learning models (if the image analysis workflow is not already contained in the first machine-learning model). The set of images 230 representing a biological process is input into the pipeline by inputting the set of images into the first machine-learning model. On the other end of the pipeline, the predicted hypothesis is output by the second machine-learning model. If the two machine-learning models were trained individually, a suitable loss function would have to be defined for evaluating the quality of the resulting image analysis workflow. However, without knowledge about the purpose of the image analysis workflow, the quality of the image analysis workflow might not be easily evaluated automatically. As a result, an expert might have to judge the quality of the image analysis workflow manually, or at least specify a desired image analysis workflow manually, resulting in a highly labor-intensive training of the first machine-learning model. In the proposed concept, the second machine-learning model is used, in a way, to evaluate the quality of the image analysis workflow - if the second machine-learning model can predict, from the output of the image analysis workflow, which hypothesis is being tested, the image analysis workflow has yielded suitable information for confirming or disproving the hypothesis. Thus, if the second machine-learning model predicts the same (or a highly similar) hypothesis as the actual hypothesis being evaluated using the biological process, then the output of the image analysis workflow is, in all likelihood, also suitable for confirming or disproving the hypothesis. In effect, the entire pipeline is trained in an end-to-end manner to reduce the difference between the predicted hypothesis and the actual hypothesis, with the result that the image analysis workflow, which is part of the pipeline, is configured or implemented in a way that is suitable for the hypothesis at hand. In other words, the first and second machine-learning model are adjusted and/or trained together in an end-to-end manner. For this purpose, supervised learning may be used (with the sets of images (and optionally the actual hypotheses) as training inputs, the actual hypotheses as desired outputs, and the loss function). Alternatively, reinforcement learning may be used, with the loss function being used to calculate the reward in this case.

The task for the training is to configure an image analysis workflow such that it extracts information which can help to observe a particular hypothesis (see also Fig. 2). Fig. 2 shows a schematic diagram of an example of a flow for training the above-referenced hypothesis prediction pipeline.

Input images 230 are loaded by the user 200, recorded by an imaging device 210 or loaded / streamed from a data repository 220. As shown in Fig. 1a and 1b, the images are input 110, as set of images 230, into a first image analysis model 240 (i.e., the first machine-learning model). These images show a biological process, which may usually include a transformation, e.g., from an initial state into a target state, optionally via one or more intermediate states.

The images represent the biological process, and thus also its states. For example, the images are taken at regular or irregular intervals over time, documenting the biological process, and thus the transformation. For example, the set of images may comprise a sequence of images showing a development of the biological process over time. For example, the set of images may comprise various types of images, such as reflectance images, fluorescence images, hy-perspectral images. For example, for each point in time of the time interval represented by the set of images, one or more images (taken using one or more imaging modalities) may be included in the set of images. For example, the method may comprise obtaining the set of images from a corpus of training data (in case training is performed) or from an imaging device (e.g., a microscope) of an imaging system. For example, the set of images may be a set of microscope images, i.e., images taken by a microscope.

The first image analysis model 240 (i.e., the first machine-learning model) is trained to process the images. **In** some examples, which will be elaborated in the following, the first image analysis model is trained to predict an image analysis workflow and initial parameters 250 for it (i.e., to generate parameters 250 for parametrizing an image analysis workflow 260). Alternatively, the image analysis workflow can be fully replaced by a deep learning model, in which case the model 240 does not need to predict any workflow parameters but predict a desired information (i.e., the output of the image processing workflow) 270 directly, i.e., implement the image analysis workflow. Accordingly, the first image analysis model 240 may be trained to perform the image analysis workflow.

In the former case, the first image analysis model 240 (i.e., the first machine-learning model) is trained to generate parameters 250 for parametrizing the image analysis workflow. In this case, the image analysis workflow comprises a plurality of image processing and analysis steps. For example, within the image analysis workflow, an arbitrary sequence of image processing and/or analysis steps may be used. In particular, the image processing workflow comprises a plurality of image processing or analysis steps that are executed sequentially, i.e., at least two image processing/analysis steps. To give an example - the image analysis workflow may comprise one or several general-purpose image processing steps, such as debayering, denoising, sharpening, contrast adjustment, bandpass filtering etc. In addition, one or more image analysis steps may be applied on the processed image data. For example, in one branch of the image analysis workflow, an image processing step may be applied to isolate a wavelength range (e.g., range of colors) that is indicative of a specific chemical, protein or disease.

In a subsequent image analysis step, image segmentation may be performed to delimit the area, in which the specific chemical, protein or disease occurs. Finally, a further image analysis step may be applied to estimate the proportion of the overall area in which the specific chemical, protein or disease occurs, or fitting may be used to output information on a 2D or 3D geometry of the occurrence of the chemical, protein or disease. In another branch, an image processing step may be applied to isolate a wavelength range (e.g., range of colors) that is indicative of a cell fate. In a subsequent image analysis step, a trained classifier may be used to output the cell fate based on the isolated wavelength range. In another branch, image segmentation or image classification may be used to determine presence and/or location of an entity.

Such image processing steps may be implemented using different techniques - for example, denoising may be performed using a (one-pass) deterministic filter (e.g., removing outliers based on the content of adjacent pixels of the same color/channel), using an iterative and deterministic filter (i.e., multi-pass) deterministic filter (e.g., gradually reducing differences based on the content of adjacent pixels), using a (one-pass) machine-learning-based filter (e.g., passing the image once through a machine-learning model being trained to reduce noise) or using an iterative machine-learning-based filter (e.g., based on a generative adversarial network or based on reinforcement learning). In other words, the image processing workflow may comprise at least one of one or more deterministic image processing steps, and one or more machine-learning-based image processing steps.

In the case of the first machine-learning model generating the parameters for configuring the image analysis workflow, the generation of the parameters might not only include the generation of parameters for a fixed set of image processing/analysis steps, but rather also the selection of the image processing/analysis steps. For example, the first machine-learning model may be trained to select at least one of a use of one or more image processing steps, one or more numerical parameters of one or more image processing steps, and one or more categorical parameters of one or more image processing steps for the image analysis workflow. In this case, the output of the first machine-learning model 240 may be encoded as follows: Every image analysis workflow comprising or consisting of one or more image processing/analysis steps (each representing an image transformation) can be stored with a unique identifier (UID). This UID can be suitably encoded to become part of a vector, for example using a sparse encoding or a one-hot encoding, that is denoted *ωᵢ* in Fig. 2. The image analysis workflow may contain one or more deterministic image analysis steps which are parameterized and of zero or more machine learning models such as deep neural networks. In case the workflow contains deterministic image analysis steps with parameters, categorical parameters *αⱼ* and numerical parameters *βₖ* may be distinguished. Thus, the model 240 may have two outputs: One with a regressor head predicting numerical parameters *βₖ* and one classifier head predicting categorical parameters, typically a concatenation of *ωᵢ* with *αⱼ.* The predictions 250 of that same model 240 may be used to configure the image analysis workflow 260.

The image analysis workflow 260 comprises or consists of one or more deterministic image analysis steps or one or more machine learning models being used to predict the desired information 270 (such as a classification, segmentation etc.) from the images 230. When such a separate image analysis workflow is used, the method may comprise processing 120 the set of images using the image analysis workflow, with the image analysis workflow being parametrized based on an output of the first machine-learning model.

The output 270 of the image analysis workflow, e.g., along with the images 230, is the input to the second machine learning model 280 which outputs a hypothesis. Accordingly, the method of Figs. 1a and 1b comprises inputting the output 270 of the image analysis workflow into the second machine-learning model 280.

The output of the image analysis workflow, regardless of whether a separate image analysis workflow is used or whether the image analysis workflow is part of the first machine-learning model, may contain different types of information. In general, the output of the image analysis workflow may comprise a set of information characterizing the set of images. For example, the, output of the image analysis may comprise one or more of numerical data characterizing the set of images (e.g., a respective concentration of one or more entities, or a proportion of an overall area taken by an entity etc.), binary data characterizing the set of images (e.g., presence of absence of an entity, a condition being true or false etc.), categorical data characterizing the set of images (e.g., a cell fate being one of dead, alive, migratory, static etc.), or spatial data (e.g., coordinates of bounding boxes, or a segmentation map). The output of the image analysis workflow may be provided as an embedding (e.g., as a vector) characterizing the set of images. In some examples, the output of the image analysis workflow may comprise image data, e.g., cropped and/or processed portions of the set of images.

In addition to the output by the image analysis workflow, the set of images or a processed version of the set of images may be used as further input to the second machine-learning model. In other words, the second machine-learning model 280 may accept both, information predicted by the workflow 270 and the set of images 230 as input. The information output by the second machine-learning model and the images can also be preprocessed together. For example, if the information output by the second machine-learning model comprises bounding boxes, these can be used to crop objects from the images 230 and use only those as input to 280. Similarly, if the information 270 comprises binary semantic or instance segmentation maps or probability maps from a segmentation workflow, this can be multiplied to crop or modulate the original inputs 230 and use the such modulated signal as input to 280.

The second machine-learning model is then trained to output a prediction 290 of a hypothesis being evaluated using the biological process. As the predicted hypothesis is compared with the actual hypothesis when determining the loss function, the hypotheses may be provided in a format that a) can be efficiently output by the second machine-learning model, and that b) can be objectively compared with the actual hypothesis. In particular, the second machine-learning model may be trained to output a formal representation of the prediction of the hypothesis, with the loss function being calculated based on a comparison between the formal representation of the prediction of the hypothesis and a formal representation of the actual hypothesis. For example, as will be described in the following, the hypothesis may be output using the same encoding (i.e., formal representation) as a natural language processing model 330 (shown in Fig. 3). Similarly, the actual hypothesis (i.e., the target), may be obtained from the model 330. In the following, the formal representation of the hypothesis is discussed in connection with a voice- or unstructured-text-based definition of the hypothesis, which is primarily applicable after training of the first and second machine-learning model, e.g., during application of the proposed concept. However, the formal representation being used is the same that is being used during training. During training, this formal representation may be obtained from the corpus of training data. In some example, to prepare the corpus of training data, the same voice- or unstructured-text-based definition of the hypothesis may be used. Alternatively, the formal representation (included in the corpus of training data) may be input using a graphical user interface, or derived from a database of metadata included with the respective sets of images.

(At least) during application of the proposed concept, the method may comprise processing 150 user input 300, 350, 360 (as shown in Fig. 3) to generate the formal representation of the actual hypothesis. In particular, the user input may comprise one of spoken text and unstructured written text. Accordingly, the method may comprise processing 310, 330 (see Fig. 3) the user input using natural language processing, or the user input may comprise structured input. Fig. 3 shows a schematic diagram of an example of a flow for obtaining an input of a hypothesis from the user. Fig. 3 shows the user with a voice interface (300). At 310, a machine learning model is trained/configured to convert vocal utterings into text. The text output 320 (e.g., "Find how actin behaves under treatment with 5 mM nocodazole for 3 hours") is passed to a machine learning model 330 configured to process the biomedical natural language and to output a hypothesis 340 (as a formal representation of the hypothesis). For example, the resulting formal representation may be *"P*(*Dₜ*(*@PROT*$*, x, t)* |*(@CHEMICAL$; $INHIB$; $PROT$), K1)"* (the different components are discussed in the following). Fig. 3 further shows alternative input forms, such as typing in text (350) or using a graphical user interface to select entities, relations, conditions, cell fate etc. (360).

The formal representation discussed above is based on a template scheme, where the overall structure of the template comprises "blanks" where the respective information is to be inserted. In the following, first the different items that fill in the blanks are introduced - entities, relations, conditions, cell fates and distributions.

In the following, some definitions are given for formulating a formal definition of a hypothesis. In a hypothesis, an entity E can be any kind of biological or medical entity, informally any proper noun which is a technical term in biology or medicine. In particular, these can be of type protein, chemical, drug, disease. In summary, an entity may be of type chemical, protein, nucleotide, carbohydrate, lipid, drug and disease.

A relation R can exist between two entities, optionally given a condition. Common relations include chemical-protein relations. They can be one of activator, inhibitor, agonist, antagonist, upregulator, downregulator, substrate of, product of. Other relations include drug-drug interaction, gene-disease associations. In evidence-based medicine, e.g., in a corpus like EBM PICO, word-level annotations are included down the line of Participant, Intervention, Comparator and Outcome. Thus, a relation that includes Participant, Intervention, Comparator and Outcome enables investigating the empirical results of evidence-based medicine at the microscopic level. In summary, a relation may comprise one of a first entity acting as activator for a second entity, a first entity acting as inhibitor for a second entity, a first entity acting as antagonist for a second entity, a first entity acting as upregulator for a second entity, a first entity acting as downregulator for a second entity, a first entity acting as substrate of a second entity, a first entity being a product of a second entity, and/or a relation may be one of a chemical-protein relation, a drug-drug-interaction, and a gene-disease interaction, and a participant-intervention-comparator-output relation.

A condition K is an optional part of a hypothesis. Some entities or relations are only observable under a given condition with a certain probability. The condition may also be NULL (i.e., non-existent) in which case the probability to observe an entity or relation is 1.0. Conditions can be a function of time. Conditions can, for example, be of type NULL. Conditions can, for example, be of type perturbant concentration (chemical, drug, low molecular weight compound). This condition is time variant. Conditions can, for example, be of type culture conditions (pH (a value representing the acidity or alkalinity of a solution), CO₂ (carbon dioxide) partial pressure, H₂O (water) saturation of atmosphere, temperature, nutrients). This condition is time variant. Conditions can, for example, be of type co-culture: Simultaneous culturing of > 1 cell type in a culture vessel, dish or vial. The relative abundance of cell types in 2D or 3D culture, organoids, spheroids can be expressed as a vector and is the co-culture condition. This condition is possibly time variant. Conditions can, for example, be of type cell composition: A tissue may contain several cell types defined by genetic traits or morphological, proteomic or metabolomic phenotypes. The relative abundance of a particular cell type in tissue or organs is the cell composition. This condition is unlikely to be time variant. Conditions can, for example, be of type proximity: Interactions (relations) can occur as a function of distance between two entities. Proximity can be expressed as a class (colocalizes / does not colocalize to a microscopically resolvable structure, such as a cell organelle, histological marker, tissue), or as a real valued number or vector with according to some distance metric (e.g., a p-norm as in *L*₁ norm, *L*₂ norm, *Lₚ* norm, *L*_{∞} norm). Proximity may be time variant. In summary, a condition may be one of a perturbant concentration condition, a culture condition, a co-culture condition, a cell composition condition, and a proximity condition. Multiple conditions may co-occur or met simultaneously to make a particular observation.

A cell fate F indicates whether cells proliferate (i.e. undergo mitosis) or die (undergo necrosis in a tissue or apoptosis (controlled cell death) or unspecified cell death on the cell level). Other cell fates include migratory vs. static.

A distribution *D(x)* is a spatial map of cell types, i.e. the entirety of all locations of a cell type (or other enumerable entities which have object instances) in a culture, tissue or organ. It can also represent a population of non-resolvable entities (such as chemicals, dyes, proteins, nucleotides, carbohydrates, lipids). In the latter case *D(x)* represents a probability map to encounter a particular entity E in location x, which is proportional to the concentration of E at *x.* In all cases above x is a coordinate in *Rⁿ* where *n* can comprise 2 to 3 spatial coordinates, a channel (emission wavelength or window) coordinate, an excitation wavelength, fluorescence lifetime and derivative values, a vibrational spectral property (e.g. wavenumber) as well as other properties which can be spatially resolved, such as multi-photon excited fluorescence, second or third harmonics, polarization or other physical properties of electromagnetic radiation which are recorded by an imaging device. Optionally, distributions can be function of space and time, i.e., *D(x, t).*

Given the definitions above, the hypothesis can be formulated as a probability to observe a particular event as one of
a) A tuple of two entities and a relation down the line of *P*((*E*₁; *R; E*₂)|*K*)*,* where *Eₙ* are two different entities, *R* is a relation and *K* a condition (which can be NULL);
b) *P(F K)* where *F* is a cell fate and *K* a condition;
c) *P(D_{T}* | *K*) where *D_{T}* is a cell type distribution and *K* a condition. *D_{T}*(*x*) can occur in organs, tissue, organoids, 3D cell culture or 2D cell culture;
d) *P*(*Dₚ* | *K*) where *Dₚ* is an entity distribution of a non-enumerable entity such as chemical, protein, nucleotide, carbohydrate, or lipid.

Any observable, such as a distribution *D* can depend on joint conditions of one or more conditions, one or more relations, the presence of one or more entities. So, there can be cases such as *P*(*Dₚ* | (*E*₁; *R; E*₂, *K*₁*, K*₂*, ..., Kₙ*) where one observes a distribution of e.g. a protein *E*₂ given that a chemical *E*₁ is in a relation with *E*₂ (such as being an activator thereof) and particular culture conditions (such as temperature, presence of *E*₁ in the culture vessel at a particular concentration).

In summary, the respective formal representation may represent at least one of a relation between two entities (*E*₁; *R; E*₂)*,* a relation between two entities being dependent on a condition ((*E*₁; *R; E*₂)|*K*)*,* a cell fate being dependent on a condition *(F* | *K),* a cell type distribution being dependent on a condition (*D_{T}* | *K),* a two-dimensional or three-dimensional geometry being dependent on a condition, and an entity distribution of a non-numerable entity being dependent on a condition (*Dₚ* | *K*). The hypothesis may relate to a probability of the above-referenced options, e.g., *P*(*E*₁; *R; E*₂) etc.

During application of the proposed concept, and, in some cases, during generation of the training corpus, the user can input a hypothesis based using one out of three ways: Voice interface, unstructured text or structured input. Fig. 3 shows an overview. The user can input a hypothesis using a voice interface 300 which then gets processed by a voice recognition system. The proposed system has a machine learning model configured to convert vocal utterings 310 into unstructured text comprising a hypothesis 320 to be tested by the microscope system later. Due to the nature of biomedical text with a lot of technical terms, the former ML (Machine Learning) model may be fine-tuned in-domain on language from a biomedical field. A further machine learning model 330 may be used, which is configured to process unstructured text and perform several natural language recognition tasks on biomedical text comprising of at least named entity recognition (NER) and relation extraction (RE). Optionally, there can be further NLP (Natural Language Processing) tasks such as document classification, sentence similarity and question answering. These functions can be performed by one multi-task model or by several models thus configured. The output from the further machine-learning model 330 is a formulation of a scientific hypothesis 340 which can be processed by a machine downstream. Alternative examples include the user inputting unstructured text directly 350 be processed by the further machine-learning model 330 or selecting entities, relations, conditions, observables (e.g. distribution, cell fate) from a graphical user interface 360.

In some examples of the proposed disclosure, for the NLP model 330 in Fig. 3, a transformer-type neural network may be used, for example a BERT (Bidirectional Encoder Representations from Transformer) model or T5 model (text-to-text transfer transformer) at its core, though a bidirectional LSTM (BiLSTM, Bidirectional Long Short-Term Memory) could be used as well. For NER (Named Entity Recognition), which may be used to identify the entities, relations, conditions, cell fates and distributions, the feature extraction may include character-level embeddings created by a CNN (Convolutional Neural Network), which are concatenated with contextual word embeddings output by the transformer or BiLSTM. These concatenated embeddings may then be passed through a logistic regression layer or conditional random field (CRF), which may output a probability distribution for classification. For relation extraction, the inputs may be tagged with a class token and sentence markers and entities may be anonymized to avoid overfitting. Then, as in NER, the tokenized input may be converted into BERT or LSTM embeddings, which then get classified by a linear layer or multilayer perceptron.

In general, the specification of the hypothesis may be done on the same system that is also being used to apply the proposed concept. However, as a further input modality, a mobile device may be used, such as a smartphone. For example, the specification of the hypothesis by the user may be performed on a mobile device. The hypothesis 340 output by that pipeline may then be sent to the system which runs the information extraction pipeline 240 - 280.

During training and application, the above-mentioned hypotheses are used to determine how to adjust the first and second machine-learning model. As shown in Figs. 1a and 1b, the method comprises calculating 160 a loss function based on a difference between the prediction of the hypothesis being evaluated using the biological process and the actual hypothesis 330 being evaluated using the biological process. For example, a metric may be defined for determining the loss function. For example, the hypotheses may be projected, according to a pre-defined ruleset, into a coordinate space, and the loss function may be determined based on a distance between the hypotheses in the coordinate space. Alternatively, other distance metrics may be defined and evaluated, e.g., based on a matrix or vector representation of the two hypotheses. Based on the result of the loss function, the first and second machine-learning model are then adjusted. The whole pipeline 240-290 is trained/adjusted end-to-end using a suitable loss function over the parameters of the machine learning models by means of gradient backpropagation. In particular, during both training and application, the first and/or second machine-learning model may be adjusted until the prediction of the hypothesis matches the actual hypothesis according to a matching criterion (e.g., until the result of the loss function fulfils a criterion, and/or until the two hypotheses are sufficiently similar according to the distance metric). In Fig. 2, the training is indicated by a feedback path 295.

As outlined above, the adjustment of the first and second machine-learning model may occur in two stages/phases - in a training stage/phase, and an application stage/phase. In the training stage/phase, the method may be performed over a plurality of iterations using a plurality of sets of images as training input images and a plurality of corresponding actual hypotheses for comparison with the hypotheses predicted by the second machine-learning model to train the first and/or second machine-learning model. For example, a corpus of training data (comprising the plurality of sets of images and the plurality of corresponding actual hypotheses) may be used for training.

In the following, the application of the trained system for selecting the workflow is discussed. Once the pipeline has been trained/adjusted, applying it means a forward pass through it comprising stages 240 - 270. For example, the output may be the desired information which the pipeline was trained to match to a hypothesis. In other words, the method may comprise providing 130 the output of the image analysis workflow. In addition, the method may comprise providing the output of the second machine-learning model (for comparison), or the output of the first machine-learning model (e.g., to store the configuration of the image analysis workflow for later use), or the first machine-learning model (to apply the first machine-learning model to further sets of images). In the application phase, the first and/or second machine-learning model may be finetuned to the set of images at hand. In this case, the first and second machine-learning models are pre-trained machine-learning models, which are adjusted in the field. In some examples, both training and application may be performed on the same system. In some other examples, however, different systems may be used for training and application.

In an alternative implementation, the whole pipeline 240 - 280 may be replaced by one deep neural network which accepts images as input and predicts the encoded hypothesis 290 directly. It can be trained end-to-end using backpropagation, e.g., shown for the combination of models 240 and 280. In this case, the first and second machine-learning model may be part of a single machine-learning model, with the output of the image analysis workflow being, a) inherently contained within the single machine-learning model, and b) being provided at an output of the single machine-learning model.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). **In** embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the above-mentioned machine-learning models may be artificial neural networks (ANNs). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. **In** other words, the training of an artificial neural network may comprise adjusting the weights of the nodes and/or edges of the artificial neural network, i.e. to achieve a desired output for a given input. For example, the machine-learning models may be deep neural networks, i.e., artificial neural networks comprising at least one hidden layer.

Alternatively, the respective machine-learning models may be support vector machines, random forest models or gradient boosting models. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the respective machine-learning models may be Bayesian networks, which is a probabilistic directed acyclic graphical model. A Bayesian network may represent a set of random variables and their conditional dependencies using a directed acyclic graph. Alternatively, the machine-learning models may be based on a genetic algorithm, which is a search algorithm and heuristic technique that mimics the process of natural selection.

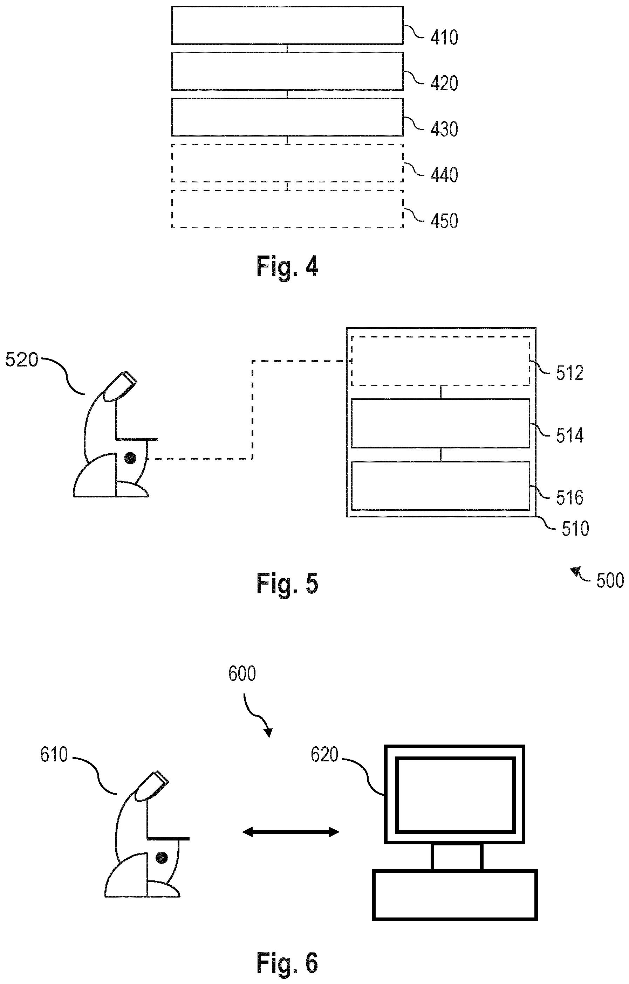

More details and aspects of the method for adjusting a first and/or second machine-learning model are mentioned in connection with the proposed concept, or one or more examples described above or below (e.g., Fig. 4 to 6). The method for adjusting a first and/or second machine-learning model may comprise one or more additional optional features corresponding to one or more aspects of the proposed concept, or one or more examples described above or below.

In connection with Figs. 1a to 3, the adjustment of the machine-learning models was discussed, which is used both during training and application of the concept. In Fig. 4, a method is presented that relies on the adjustments presented above, and uses the resulting image analysis workflow to process sets of images. While both methods may be performed by the same system, the separation also allows separation of both methods. For example, training/adjustment may be performed by a first system (e.g., a workstation, server or cloud node), while image processing may be performed by an embedded system that is co-located with the respective imaging device (e.g., microscope). In various examples, the trained pipeline may be implemented on a computer attached to an imaging system, a stand-alone desktop computer, a server on-premise or in the cloud or an embedded device attached to an imaging device.

Fig. 4 shows a flow chart of an example of a method for processing a set of images representing a biological process. The method comprises inputting 410 the set of images representing the biological process into a machine-learning model. The machine-learning model (e.g., the first machine-learning model discussed in connection with Figs. 1a to 3) is trained/adjusted, according to the method of Figs. 1a and/or 1b, to perform an image analysis workflow or to generate parameters for parametrizing an image analysis workflow. The method further comprises processing 420 the set of images using the image analysis workflow (e.g., as a separate workflow, or using the machine-learning model). The method comprises providing 430 an output of the image analysis workflow. For example, the method may be implemented as outlined in connection with the method of Figs. 1a to 1b.

In some examples, it may be useful not only to obtain the output of the image analysis workflow, but also a predicted hypothesis being provided by a second machine-learning model. For example, the method may comprise inputting 440 the output of the image analysis workflow into a second machine-learning model, the second machine-learning model being trained to output a prediction of a hypothesis being evaluated using the biological process. The method may comprise providing 450 the prediction of the hypothesis being evaluated using the biological process.

More details and aspects of the method for processing a set of images representing a biological process are mentioned in connection with the proposed concept, or one or more examples described above or below (e.g., Fig. 1a to 3, 5 to 6). The method for processing a set of images representing a biological process may comprise one or more additional optional features corresponding to one or more aspects of the proposed concept, or one or more examples described above or below.

Fig. 5 shows an example of a system that is suitable for performing the above methods. Fig. 5 shows a schematic diagram of an example of a system 510, and of an imaging system 500 comprising a system 510 and a scientific imaging device 520 (e.g., a microscope, such as laboratory microscope). The system 510 comprises one or more processors 514 and one or more storage devices 516. Optionally, the system 510 further comprises one or more interfaces 512. The one or more processors 514 are coupled to the one or more storage devices 516 and to the one or more interfaces 512. **In** general, the functionality of the system 510 may be provided by the one or more processors 514, in conjunction with the one or more interfaces 512 (for exchanging data/information with one or more other components of the imaging system 500 and outside the scientific or surgical imaging system 500, such as one or more optical imaging sensors of the scientific imaging device 520, another system (e.g., a cloud-based system), or a display device of the imaging system), and with the one or more storage devices 516 (for storing information, such as machine-readable instructions of a computer program being executed by the one or more processors). **In** general, the functionality of the one or more processors 514 may be implemented by the one or more processors 514 executing machine-readable instructions. Accordingly, any feature ascribed to the one or more processors 514 may be defined by one or more instructions of a plurality of machine-readable instructions. The system 510 may comprise the machine-readable instructions, e.g., within the one or more storage devices 516.

Such a system may be used to perform various tasks. For example, the system may be configured to perform the method shown in connection with Figs. 1a and/or 1b. Alternatively, or additionally, the system may be configured to perform the method shown in connection with Fig. 4.

In various examples, the system 510 is used together with the scientific imaging device 520 of the imaging system. In particular, the system 510 may be co-located with the scientific imaging device 520. Alternatively, the system 510 may be part of a server (e.g., cloud node), and be coupled to the scientific imaging device 520 via a computer network (e.g., via the internet). In general, the scientific imaging device may be configured to generate the set of images being processed. As is evident, the system may be implemented differently, depending on what aspects of the above methods is being performed by the system. For example, the system may be one of a server, a cloud computing node, a workstation computer and an embedded device. For example, a server, cloud computing node or workstation computer may be used primarily for the training of the machine-learning models, and for a subsequent adjustment of the machine-learning models to the set of images at hand. An embedded device, i.e., a system that is co-located with the scientific imaging device, may perform the processing of the set of images using the image analysis workflow, and, if powerful enough, the adjustment of the machine-learning models to the set of images at hand.

The one or more interfaces 512 of the system 510 may correspond to one or more inputs and/or outputs for receiving and/or transmitting information, which may be in digital (bit) values according to a specified code, within a module, between modules or between modules of different entities. For example, the one or more interfaces 512 may comprise interface circuitry configured to receive and/or transmit information. The one or more processors 514 of the system 510 may be implemented using one or more processing units, one or more processing devices, any means for processing, such as a processor, a computer or a programmable hardware component being operable with accordingly adapted software. In other words, the described function of the one or more processors 514 may as well be implemented in software, which is then executed on one or more programmable hardware components. Such hardware components may comprise a general-purpose processor, a Digital Signal Processor (DSP), a micro-controller, etc. The one or more storage devices 516 of the system 510 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system and imaging system are mentioned in connection with the proposed concept, or one or more examples described above or below (e.g., Fig. 1a to 4, 6). The system and imaging system may comprise one or more additional optional features corresponding to one or more aspects of the proposed concept, or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a imaging device (e.g., microscope) or imaging system comprising a system as described in connection with one or more of the Figs. 1a to 5. Alternatively, an imaging device/microscope may be part of or connected to a system as described in connection with one or more of the Figs. 1a to 5. Fig. 6 shows a schematic illustration of a system 600 configured to perform a method described herein. The system 600 comprises an imaging device/microscope 610 and a computer system 620. The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 620 may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

**In** some embodiments, a programmable logic device (for example, a field programmable gate array) may be used to perform some or all of the functionalities of the methods described herein. **In** some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm.

Furthermore, some techniques may be applied to some of the machine-learning algorithms. For example, feature learning may be used. **In** other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

In the present concept, various acronyms and terms are used, which are shortly summarized in the following. A DNN is a deep neural network, which can involve any algorithm, such as MLP (Multi-Layer Perceptron), CNN (Convolutional Neural Network), RNN (Recurrent Neural Network), or Transformer (a neural network mainly based on attention mechanism). A target neural network is a deep neural network being trained described in the present concept. An image is a digital image, for example with dimensions XY (i.e., two lateral dimensions X and Y), XYZ (i.e., a depth-dimension Z in addition to the two lateral dimensions X+Y), XY+T (XY + Time), XYZ+C (XYZ + Channel), XYZ+T (XYZ + Time), XYZCT (XYZ + Channel + Time), XYZCT+other modalities. In other words, a 2D or nD digital image (tensor) with n ∈N. A (image processing) workflow refers to the sequential execution of multiple image processing or image analysis steps where the output of the i-th step is passed to the input of the (i+1)th step.

### List of reference Signs

- 110: Inputting a set of images
- 120: Processing the set of images
- 130: Providing an output of an image analysis workflow
- 140: Inputting an output of the image analysis workflow into a second machine-learning model
- 150: Processing user input
- 160: Calculating a loss function
- 170: Adjusting the first and/or second machine-learning model
- 200: User
- 210: Imaging device
- 220: Data repository
- 230: Images
- 240: First image analysis model / first machine-learning model
- 250: Parameters for image analysis workflow
- 260: Image analysis workflow
- 270: Output of the image analysis workflow
- 280: Second machine-learning model
- 290: Predicted hypothesis
- 295: Feedback path
- 300: User with voice interface
- 310: Process vocal utterings and convert to text
- 320: Text output
- 330: Process natural language
- 340: Hypothesis
- 350: Hypothesis input via typed text
- 360: Hypothesis input via user interface
- 410: Inputting a set of images
- 420: Processing the set of images
- 430: Providing an output of the image analysis workflow
- 440: Inputting the output of the image analysis workflow into a second machine-learning model
- 450: Providing a prediction of a hypothesis
- 500: Imaging system
- 510: System
- 512: One or more interfaces
- 514: One or more processors
- 516: One or more storage devices
- 520: Imaging device
- 600: System
- 610: Microscope/imaging device
- 620: Computer system

## Claims

1. A computer-implemented
method for adjusting a first and a second machine-learning model, the method comprising:
inputting (110) a set of images (230) representing a biological process into the first machine-learning model (240), the first machine-learning model being trained to perform an image analysis workflow or to generate parameters (250) for parametrizing an image analysis workflow (260);
inputting (140) an output (270) of the image analysis workflow into the second machine-learning model (280), the second machine-learning model being trained to output a prediction (290) of a hypothesis being evaluated using the biological process;
calculating (160) a loss function based on a difference between the prediction of the hypothesis being evaluated using the biological process and an actual hypothesis (130) being evaluated using the biological process, and
adjusting (170) the first and/or second machine-learning model based on the result of the loss function.

2. The method according to claim 1, wherein the first and/or second machine-learning model are adjusted until the prediction of the hypothesis matches the actual hypothesis according to a matching criterion.

3. The method according to one of the claims 1 or 2, wherein the method is performed over a plurality of iterations using a plurality of sets of images as training input images and a plurality of corresponding actual hypotheses for comparison with the hypotheses predicted by the second machine-learning model to train the first and/or second machine-learning model.

4. The method according to one of the claims 1 to 3, wherein the first and second machine-learning model are adjusted and/or trained together in an end-to-end manner.

5. The method according to one of the claims 1, 2 or 4, wherein the first and second machine-learning models are pre-trained machine-learning models, which are adjusted in the field.

6. The method according to one of the claims 1 to 5, wherein the first machine-learning model is trained to generate parameters (250) for parametrizing the image analysis workflow, the method comprising processing (120) the set of images using the image analysis workflow, the image analysis workflow being parametrized based on an output of the first machine-learning model.

7. The method according to claim 6, wherein the first machine-learning model is trained to select at least one of a use of one or more image processing steps, one or more numerical parameters of one or more image processing steps, and one or more categorical parameters of one or more image processing steps for the image analysis workflow.

8. The method according to one of the claims 1 to 7, wherein the set of images or a processed version of the set of images is used as further input to the second machine-learning model.

9. The method according to one of the claims 1 to 8, wherein the second machine-learning model is trained to output a formal representation of the prediction of the hypothesis, with the loss function being calculated based on a comparison between the formal representation of the prediction of the hypothesis and a formal representation of the actual hypothesis.

10. The method according to claim 9, wherein the method comprises processing (150) user input (300; 350; 360) to generate the formal representation of the actual hypothesis, wherein the user input comprises one of spoken text and unstructured written text, the method comprising processing (310; 330) the user input using natural language processing, or wherein the user input comprises structured input.

11. The method according to one of the claims 9 or 10, wherein the respective formal representation represents at least one of a relation between two entities, a relation between two entities being dependent on a condition, a cell fate being dependent on a condition, a cell type distribution being dependent on a condition, a two-dimensional or three-dimensional geometry being dependent on a condition, and an entity distribution of a non-numerable entity being dependent on a condition.

12. A method for processing a set of images representing a biological process, the method comprising:
Inputting (410) the set of images representing the biological process into a machine-learning model, the machine-learning model being trained, according to the method of one of the claims 1 to 11, to perform an image analysis workflow or to generate parameters for parametrizing an image analysis workflow;
processing (420) the set of images using the image analysis workflow; and
providing (430) an output of the image analysis workflow.

13. A system (510) comprising one or more processors (514) and one or more storage devices (516), wherein the system is configured to perform the method according to one of the claims 1 to 11 and/or the method according to claim 12

14. An imaging system (500) comprising the system (510) according to claim 13 and a scientific imaging device (520), with the scientific imaging device being configured to generate the set of images.

15. Computer program with a program code for performing the method according to one of the claims 1 to 11 or the method of claim 12 when the computer program is run on a processor.

## Patentansprüche

1. Computerimplementiertes Verfahren zur Einstellung eines ersten und eines zweiten Maschinenlernmodells, wobei das Verfahren umfasst:
Eingeben (110) eines Satzes von Bildern (230), die einen biologischen Prozess darstellen, in das erste Maschinenlernmodell (240), wobei das erste Maschinenlernmodell darauf trainiert ist, einen Bildanalysearbeitsablauf durchzuführen oder Parameter (250) zum Parametrisieren eines Bildanalysearbeitsablaufs (260) zu erzeugen;
Eingeben (140) einer Ausgabe (270) des Bildanalysearbeitsablaufs in das zweite Maschinenlernmodell (280), wobei das zweite Maschinenlernmodell darauf trainiert ist, eine Vorhersage (290) einer Hypothese auszugeben, die unter Verwendung des biologischen Prozesses evaluiert wird;
Berechnen (160) einer Verlustfunktion basierend auf einer Differenz zwischen der Vorhersage der Hypothese, die unter Verwendung des biologischen Prozesses evaluiert wird, und einer tatsächlichen Hypothese (130), die unter Verwendung des biologischen Prozesses evaluiert wird, und
Einstellen (170) des ersten und/oder zweiten Maschinenlernmodells basierend auf dem Ergebnis der Verlustfunktion.

2. Verfahren nach Anspruch 1, wobei das erste und/oder zweite Maschinenlernmodell so lange eingestellt wird, bis die Vorhersage der Hypothese entsprechend einem Übereinstimmungskriterium mit der tatsächlichen Hypothese übereinstimmt.

3. Verfahren nach einem der Ansprüche 1 oder 2, wobei das Verfahren über eine Vielzahl von Iterationen unter Verwendung einer Vielzahl von Sätzen von Bildern als Trainingseingabebilder und einer Vielzahl von entsprechenden tatsächlichen Hypothesen zum Vergleich mit den von dem zweiten Maschinenlernmodell vorhergesagten Hypothesen durchgeführt wird, um das erste und/oder zweite Maschinenlernmodell zu trainieren.

4. Verfahren nach einem der Ansprüche 1 bis 3, wobei das erste und das zweite Maschinenlernmodell gemeinsam in einer Ende-zu-Ende-Weise eingestellt und/oder trainiert werden.

5. Verfahren nach einem der Ansprüche 1, 2 oder 4, wobei das erste und das zweite Maschinenlernmodell vortrainierte Maschinenlernmodelle sind, die im Feld eingestellt werden.

6. Verfahren nach einem der Ansprüche 1 bis 5, wobei das erste Maschinenlernmodell darauf trainiert ist, Parameter (250) zum Parametrisieren des Bildanalysearbeitsablaufs zu erzeugen, wobei das Verfahren das Verarbeiten (120) des Satzes von Bildern unter Verwendung des Bildanalysearbeitsablaufs umfasst, wobei der Bildanalysearbeitsablauf basierend auf einer Ausgabe des ersten Maschinenlernmodells parametrisiert wird.

7. Verfahren nach Anspruch 6, wobei das erste Maschinenlernmodell darauf trainiert ist, mindestens eines von einer Verwendung von einem oder mehreren Bildverarbeitungsschritten, einem oder mehreren numerischen Parametern eines oder mehrerer Bildverarbeitungsschritte und einem oder mehreren kategorialen Parametern eines oder mehrerer Bildverarbeitungsschritte für den Bildanalysearbeitsablauf auszuwählen.

8. Verfahren nach einem der Ansprüche 1 bis 7, wobei der Satz von Bildern oder eine verarbeitete Version des Satzes von Bildern als weitere Eingabe für das zweite Maschinenlernmodell verwendet wird.

9. Verfahren nach einem der Ansprüche 1 bis 8, wobei das zweite Maschinenlernmodell darauf trainiert ist, eine formale Darstellung der Vorhersage der Hypothese auszugeben, wobei die Verlustfunktion basierend auf einem Vergleich zwischen der formalen Darstellung der Vorhersage der Hypothese und einer formalen Darstellung der tatsächlichen Hypothese berechnet wird.

10. Verfahren nach Anspruch 9, wobei das Verfahren das Verarbeiten (150) von einer Benutzereingabe (300; 350; 360) umfasst, um die formale Darstellung der tatsächlichen Hypothese zu erzeugen, wobei die Benutzereingabe eines von gesprochenem Text und/oder unstrukturiertem geschriebenen Text umfasst, wobei das Verfahren das Verarbeiten (310; 330) der Benutzereingabe unter Verwendung natürlicher Sprachverarbeitung umfasst, oder wobei die Benutzereingabe eine strukturierte Eingabe umfasst.

11. Verfahren nach einem der Ansprüche 9 oder 10, wobei die jeweilige formale Darstellung mindestens eines darstellt von einer Beziehung zwischen zwei Entitäten, einer Beziehung zwischen zwei Entitäten, die von einer Bedingung abhängt, einem Zellschicksal, das von einer Bedingung abhängt, einer Zelltypverteilung, die von einer Bedingung abhängt, einer zweidimensionalen oder dreidimensionalen Geometrie, die von einer Bedingung abhängt, und einer Entitätsverteilung einer nicht zählbaren Entität, die von einer Bedingung abhängt.

12. Verfahren zum Verarbeiten eines Satzes von Bildern, die einen biologischen Prozess darstellen, wobei das Verfahren umfasst:
Eingeben (410) des Satzes von Bildern, die den biologischen Prozess darstellen, in ein Maschinenlernmodell, wobei das Maschinenlernmodell nach dem Verfahren nach einem der Ansprüche 1 bis **11** trainiert wird, um einen Bildanalysearbeitsablauf durchzuführen oder Parameter zum Parametrisieren eines Bildanalysearbeitsablaufs zu generieren;
Verarbeiten (420) des Satzes von Bildern unter Verwendung des Bildanalysearbeitsablaufs; und
Bereitstellen (430) einer Ausgabe des Bildanalysearbeitsablaufs.

13. System (510), das einen oder mehrere Prozessoren (514) und eine oder mehrere Speichervorrichtungen (516) umfasst, wobei das System so konfiguriert ist, dass es das Verfahren nach einem der Ansprüche 1 bis **11** und/oder das Verfahren nach Anspruch 12 durchführt.

14. Bildgebungssystem (500), das das System (510) nach Anspruch 13 und eine wissenschaftliche Bildgebungsvorrichtung (520) umfasst, wobei die wissenschaftliche Bildgebungsvorrichtung so konfiguriert ist, dass sie den Satz von Bildern erzeugt.

15. Computerprogramm mit einem Programmcode zum Durchführen des Verfahrens nach einem der Ansprüche 1 bis 11 oder des Verfahrens nach Anspruch 12, wenn das Computerprogramm auf einem Prozessor ausgeführt wird.

## Revendications

1. Procédé mis en œuvre par ordinateur pour l'ajustement d'un premier et d'un second modèle d'apprentissage automatique, le procédé comprenant :
la saisie (110) d'un ensemble d'images (230) représentant un processus biologique dans le premier modèle d'apprentissage automatique (240), le premier modèle d'apprentissage automatique étant entraîné pour réaliser un flux de travail d'analyse d'images ou pour générer des paramètres (250) pour le paramétrage d'un flux de travail d'analyse d'images (260) ;
la saisie (140) d'une sortie (270) du flux de travail d'analyse d'images dans le second modèle d'apprentissage automatique (280), le second modèle d'apprentissage automatique étant entraîné pour produire une prédiction (290) d'une hypothèse qui est évaluée à l'aide du processus biologique ;
le calcul (160) d'une fonction de perte sur la base d'une différence entre la prédiction de l'hypothèse qui est évaluée à l'aide du processus biologique et une hypothèse réelle (130) évaluée à l'aide du processus biologique, et
l'ajustement (170) du premier et/ou du second modèle d'apprentissage automatique sur la base du résultat de la fonction de perte.

2. Procédé selon la revendication 1, dans lequel le premier et/ou le second modèle d'apprentissage automatique sont ajustés jusqu'à ce que la prédiction de l'hypothèse corresponde à l'hypothèse réelle selon un critère de correspondance.

3. Procédé selon l'une des revendications 1 ou 2, dans lequel le procédé est réalisé sur une pluralité d'itérations en utilisant une pluralité d'ensembles d'images en tant qu'images d'entrée d'entraînement et une pluralité d'hypothèses réelles correspondantes pour une comparaison avec les hypothèses prédites par le second modèle d'apprentissage automatique pour entraîner le premier et/ou le second modèle d'apprentissage automatique.

4. Procédé selon l'une des revendications 1 à 3, dans lequel les premier et second modèles d'apprentissage automatique sont ajustés et/ou entraînés ensemble d'une manière de bout en bout.

5. Procédé selon l'une des revendications 1, 2 ou 4, dans lequel les premier et second modèles d'apprentissage automatique sont des modèles d'apprentissage automatique préentraînés, qui sont ajustés sur le terrain.

6. Procédé selon l'une des revendications 1 à 5, dans lequel le premier modèle d'apprentissage automatique est entraîné pour générer des paramètres (250) pour le paramétrage du flux de travail d'analyse d'images, le procédé comprenant le traitement (120) de l'ensemble d'images à l'aide du flux de travail d'analyse d'images, le flux de travail d'analyse d'images étant paramétré sur la base d'une sortie du premier modèle d'apprentissage automatique.

7. Procédé selon la revendication 6, dans lequel le premier modèle d'apprentissage automatique est entraîné pour sélectionner au moins l'un parmi une utilisation d'une ou plusieurs étapes de traitement d'image, un ou plusieurs paramètres numériques d'une ou plusieurs étapes de traitement d'image, et un ou plusieurs paramètres catégoriques d'une ou plusieurs étapes de traitement d'image pour le flux de travail d'analyse d'images.

8. Procédé selon l'une des revendications 1 à 7, dans lequel l'ensemble d'images ou une version traitée de l'ensemble d'images est utilisé comme entrée supplémentaire sur le second modèle d'apprentissage automatique.

9. Procédé selon l'une des revendications 1 à 8, dans lequel le second modèle d'apprentissage automatique est entraîné pour produire une représentation formelle de la prédiction de l'hypothèse, avec la fonction de perte qui est calculée sur la base d'une comparaison entre la représentation formelle de la prédiction de l'hypothèse et une représentation formelle de l'hypothèse réelle.

10. Procédé selon la revendication 9, dans lequel le procédé comprend le traitement (150) d'une entrée utilisateur (300 ; 350 ; 360) pour générer la représentation formelle de l'hypothèse réelle, dans lequel l'entrée utilisateur comprend un parmi un texte parlé et un texte écrit non structuré, le procédé comprenant le traitement (310 ; 330) de l'entrée utilisateur à l'aide d'un traitement du langage naturel, ou dans lequel l'entrée utilisateur comprend une entrée structurée.

11. Procédé selon l'une des revendications 9 ou 10, dans lequel la représentation formelle respective représente au moins l'un parmi une relation entre deux entités, une relation entre deux entités qui dépend d'une condition,
un destin de cellule qui dépend d'une condition, une distribution de type de cellule qui dépend d'une condition, une géométrie bidimensionnelle ou tridimensionnelle qui dépend d'une condition, et une distribution d'entité d'une entité non numérotable qui dépend d'une condition.

12. Procédé de traitement d'un ensemble d'images représentant un processus biologique, le procédé comprenant :
la saisie (410) de l'ensemble d'images représentant le processus biologique dans un modèle d'apprentissage automatique, le modèle d'apprentissage automatique étant entraîné, selon le procédé selon l'une des revendications 1 à **11,** pour réaliser un flux de travail d'analyse d'images ou pour générer des paramètres pour le paramétrage d'un flux de travail d'analyse d'images ;
le traitement (420) de l'ensemble d'images en utilisant le flux de travail d'analyse d'images ; et
la fourniture (430) d'une sortie du flux de travail d'analyse d'images.

13. Système (510) comprenant un ou plusieurs processeurs (514) et un ou plusieurs dispositifs de stockage (516), dans lequel le système est configuré pour réaliser le procédé selon l'une des revendications 1 à 11 et/ou le procédé selon la revendication 12.

14. Système d'imagerie (500) comprenant le système (510) selon la revendication 13 et un dispositif d'imagerie scientifique (520), avec le dispositif d'imagerie scientifique étant configuré pour générer l'ensemble d'images.

15. Programme informatique avec un code de programme pour réaliser le procédé selon l'une des revendications 1 à 11 ou le procédé selon la revendication 12 lorsque le programme informatique est exécuté sur un processeur.
